# EUROPEAN PATENT APPLICATION

(11) **EP 4 704 221 A1**
(43) Date of publication of application: **04.03.2026**
(21) Application number: 25197597.5
(22) Date of filing: 22.08.2025
(51) Int. Cl.: H01M 10/625

(54) **STORAGE SYSTEM UNDER PRESSURE FOR AN ELECTRIC VEHICLE**

(30) Priority: 27.08.2024 IT 202400019276
(71) Applicant: FERRARI S.p.A., 41100 Modena (IT)
(72) Inventor: FAVARETTO, Fabrizio, 41100 MODENA (IT); BALLATORE, Marco, 41100 MODENA (IT)
(74) Representative: Studio Torta S.p.A.

(57) **Abstract**

A storage system (14) for an electric vehicle (1). The storage system (14) is designed to store electrical energy and has at least one group (26) of electrochemical pouch cells (15) and a watertight container (25) under pressure, which houses, on the inside, the group (26) of electrochemical pouch cells (15). The group (26) of electrochemical pouch cells (15) is arranged inside a flexible, watertight casing (27) inside which a vacuum is created. There is a compressor (20) configured to maintain a pressure inside the container (25) that is greater than atmospheric pressure.

## Description

### CROSS-REFERENCE TO RELATED APPLICATIONS

This patent application claims priority from Italian patent application no. 102024000019276 filed on August 27, 2024, the entire disclosure of which is incorporated herein by reference.

### FIELD OF THE ART

The present invention relates to a storage system for an electric vehicle.

### PRIOR ART

A vehicle with (partially or fully) electric drive comprises at least one electric machine mechanically connected to the drive wheels; the electric machine is powered by an electronic power converter connected to an electric storage system typically consisting of a chemical battery pack.

A dedicated cooling system must be provided for the electrical components, i.e. the electric machine, the electronic power converter and the storage system, to prevent the electrical components from overheating. In this regard, it is important to note that in use, all the electrical components have electrical energy losses that are transformed into heat, which must therefore be properly disposed of.

Patent application US2004118142A1 describes using part of the cold generated by a passenger compartment air conditioning system to cool the electrical components, i.e. the storage system, the electric machine, and the electronic power converter. However, using some of the cold generated by the passenger compartment air conditioning system has several drawbacks, as the electrical components are generally located far away from the air conditioning system and therefore long connecting hoses have to be provided, which have to be adequately insulated (and thus become bulky). Furthermore, since the cold generated has to be divided between the cooling needs of the passenger compartment and the cooling needs of the electrical components, it can happen that in the case of particularly high outside temperatures the cold available for passenger compartment cooling is insufficient and thus the comfort of the passengers is penalised; to solve this problem it is necessary to increase the cooling power of the passenger compartment air conditioning system, but this increase is not always possible due to the limits on the available space for the passenger compartment air conditioning system. Finally, the optimal refrigerant temperature for cooling the passenger compartment may be different (even very different) from the optimal refrigerant temperature for cooling the electrical components, and therefore a compromise between the different requirements for the choice of the actual refrigerant temperature is still necessary.

Patent application EP2270918A1 describes an electric vehicle having: at least one mechanically reversible electric machine that can be mechanically connected to the drive wheels; an electronic power converter that drives the electric machine; a storage system, which is designed to store electrical energy, is connected to the electronic power converter, and comprises electrochemical cells; and a cooling system, which is completely independent of and separate from the passenger compartment air conditioning system and uses a compression refrigeration cycle to cool the electrical components, namely the electric machine, the electronic power converter, and the storage system. However, the cooling system described in patent application EP2270918A1 is relatively bulky and heavy.

Patent application US2011045326A1 describes a battery module comprising a housing, at least one battery arranged in the housing, and a power supply system provided with a compressor for circulating a pressurized cooling fluid inside the housing.

Patent application JP2018018586A describes a battery module with a casing inside which a refrigerant is circulated by a compressor.

### DISCLOSURE OF THE INVENTION

The object of the present invention is to provide a storage system for an electric vehicle that is free of the drawbacks described above and at the same time easy and inexpensive to implement.

According to the present invention, a storage system is provided for an electric vehicle according to what is claimed in the appended claims.

The claims describe embodiments of the present invention forming an integral part of the present disclosure.

### BRIEF DESCRIPTION OF THE DRAWINGS

The present invention will now be described with reference to the accompanying drawings, which show a non-limiting embodiment thereof, wherein:
- Figure 1 is a schematic view, in plan and with parts removed for clarity of a (partially) electric vehicle;
- Figure 2 is a schematic view of an electrical energy storage system for the vehicle in Figure 1 and a respective air conditioning system; and
- Figure 3 is a schematic view of a group of electrochemical pouch cells of the storage system in Figure 2.

### PREFERRED EMBODIMENTS OF THE INVENTION

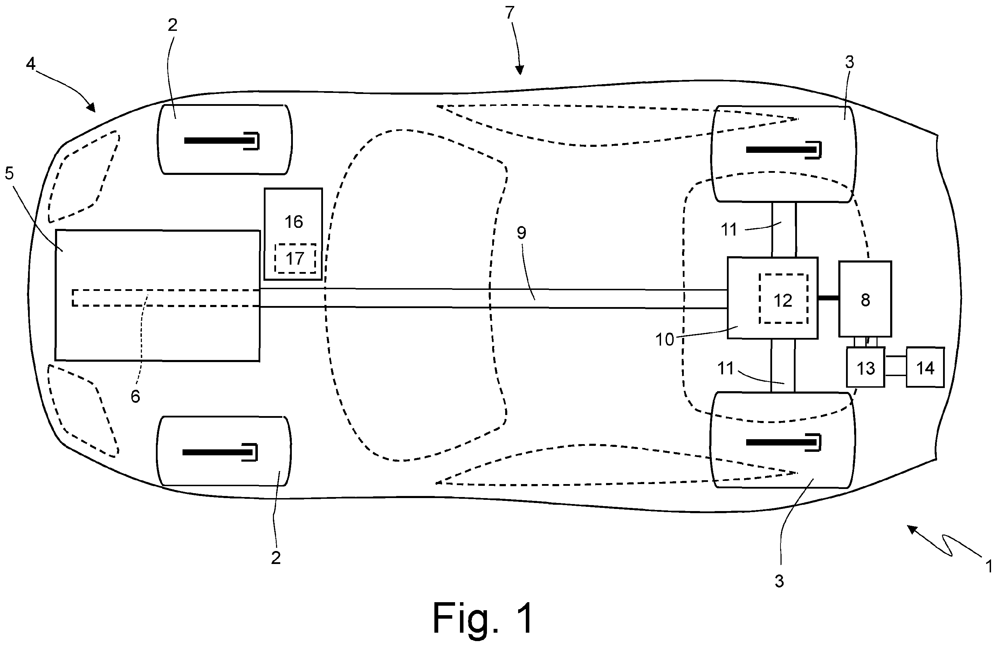

In Figure 1, the number 1 denotes a partially electric vehicle (i.e. a hybrid vehicle) with two front 2-wheel drives and two rear 3-wheel drives, which receive their drive torque from a hybrid powertrain system 4.

The hybrid powertrain system 4 comprises an internal combustion engine 5 which is arranged in a front position and is equipped with a drive shaft 6, a transmission 7 which transmits the drive torque generated by the internal combustion engine 5 to the rear drive wheels 3, and a reversible electric machine 8 (i.e. which can operate either as an electric motor by absorbing electrical energy and generating mechanical drive torque, or as an electric generator by absorbing mechanical energy and generating electrical energy) which is mechanically connected to the transmission 7.

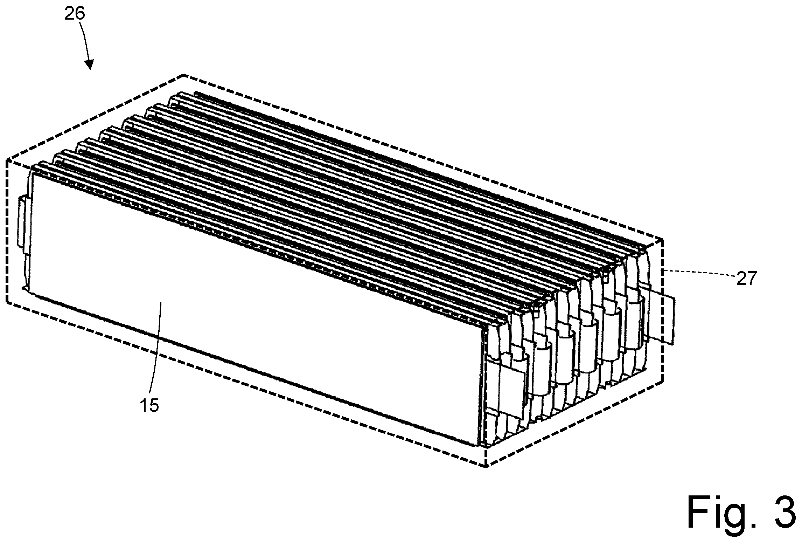

The transmission 7 comprises a drive shaft 9 which is on one side angularly integral with the drive shaft 6 and on the other side mechanically connected to a gearbox 10, which is arranged in a rear position and transmits motion to the rear drive wheels 3 by means of two semi-axles 11 which receive motion from a differential 12. The reversible electric machine 8 is mechanically connected to the gearbox 10 and is driven by an electronic power converter 13 connected to a storage system 14 which is designed to store electrical energy and comprises a series of electrochemical cells 15 (illustrated in Figure 3).

As illustrated in Figure 3, the electrochemical 15 cells are pouch-shaped and each has a parallelepiped shape; that is, the electrochemical pouch cells 15 have a flexible, rectangular shape with a thin, lightweight design (i.e. a flat, rectangular structure). Each electrochemical cell 15 is housed in its own flexible casing made of an aluminium-plastic laminate film that makes it light and compressible (the absence of a rigid casing reduces the overall weight of the electrochemical cell 15).

The electrochemical cells 15 require for their proper functioning to be compressed with a pressure of generally at least 10 bar; i.e. compression is an essential part of the design and use of electrochemical pouch cells 15 to ensure that they function safely and efficiently during their life cycle.

The compression of an electrochemical pouch cell 15 is crucial to ensure safety, performance and durability. During charge and discharge cycles, electrochemical reactions cause the internal materials to expand and without compression, the stored gas can cause an electrochemical cell 15 to swell, increasing the risk of mechanical damage or malfunction. In addition, the pressure applied to an electrochemical cell 15 helps to maintain optimal contact between the electrodes (anode and cathode) and the separator, improving ion transfer and thus performance and reducing the risk of internal short circuits or thermal runaway. The electrochemical pouch cells 15 of the storage system 14 operate optimally within a certain temperature range: if the electrochemical pouch cells 15 are too cold their discharge capacity decreases (i.e. less energy is delivered), whereas if the electrochemical pouch cells 15 are too hot their self-discharge (i.e. the energy that is lost due to processes within the electrochemical pouch cells 15) increases; therefore, to maximize the performance and efficiency of the electrochemical pouch cells 15 it is necessary to control their temperature by heating them when they are too cold and cooling them when they are too hot.

As illustrated in Figure 1, the vehicle 1 comprises a passenger compartment housing the passengers and a passenger compartment air conditioning system 16 whose function is to regulate the climate inside the passenger compartment; in order to cool and/or dehumidify the passenger compartment, the air conditioning system 16 uses a compression refrigeration cycle (i.e. a thermodynamic cycle capable of transferring heat from a low-temperature environment to a higher-temperature environment) which exploits a compressor 17.

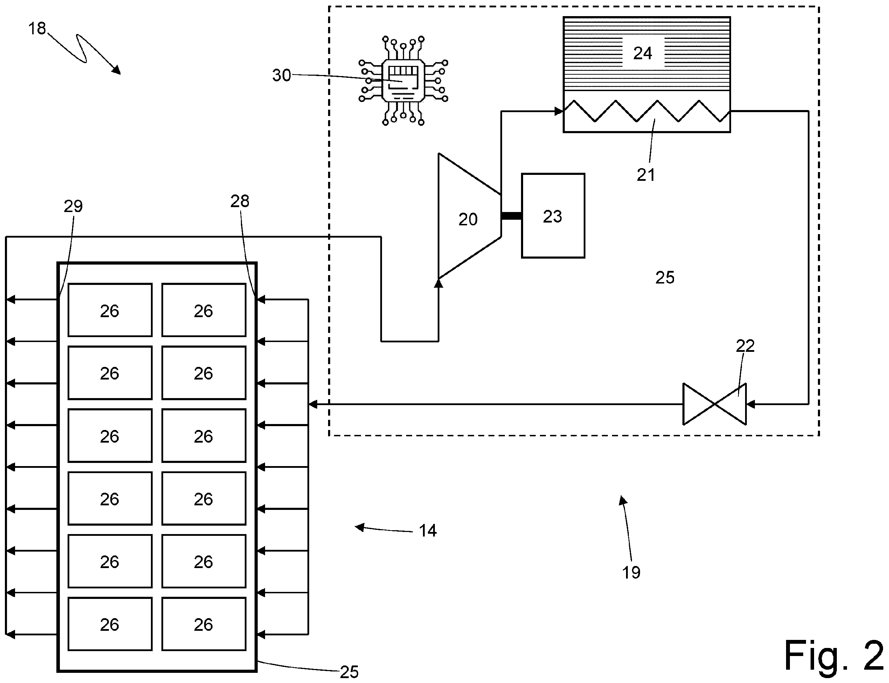

As illustrated in Figure 2, the vehicle 1 comprises an air conditioning system 18, which is completely independent and separate from the passenger compartment air conditioning system 16 and uses a compression refrigeration cycle (reversible heat pump) to air condition (at least) the storage system 14.

The air conditioning system 18 comprises a refrigeration circuit 19, which implements a compression refrigeration cycle and contains a refrigerant gas that is electrically insulating and can be, by way of non-limiting example, carbon dioxide or HCFCs (chloro-fluorocarbons-hydrogenates); among other things, these two gases are also electrically insulating. The refrigeration circuit 19 comprises a compressor 20, a condenser 21 and an expansion valve 22 (or lamination valve).

The compressor 20 is preferably of the rotary type and is driven by a dedicated electric motor 23; alternatively, the compressor 20 is driven by the electric machine 8 or the internal combustion engine 5. If the compressor 20 is driven by the electric machine 8 (or the internal combustion engine 5), an electro-actuated release device is interposed between the compressor 20 of the air conditioning system 18 and the shaft of the electric machine 8 (or the drive shaft 6 of the internal combustion engine 5) so that the compressor 20 is not involved when it is not needed.

An air radiator 24 is thermally coupled to condenser 21, which is hit by a flow of air when the vehicle 1 is in motion so as to dissipate the heat present in the condenser 21 into the environment; according to a preferred embodiment, the radiator 24 is also equipped with an electric fan controlled by a thermostat to perform forced cooling of the radiator 24 if necessary.

As illustrated in Figure 2, the storage system 14 comprises an airtight, pressurized container 25 (i.e. designed to contain gases at a pressure greater than atmospheric pressure) and a plurality of groups 26 of electrochemical pouch cells 15 which are arranged within the container 25 (operating under hyperbaric conditions, i.e. with an internal pressure greater than atmospheric pressure). As illustrated in Figure 3, each group 26 of electrochemical pouch cells 15 comprises a plurality of electrochemical pouch cells 15 arranged in a row with their major side walls in mutual contact so that the group 26 as a whole has a parallelepiped shape. That is, in the group 26 each electrochemical 15 cell is positioned next to the subsequent electrochemical 15 cell with no gaps between the major side surfaces.

In addition, each group 26 of electrochemical pouch cells 15 is arranged inside a flexible, watertight casing 27, inside which a vacuum was created; that is, each flexible casing 27 containing a respective group 26 of electrochemical pouch cells 15 is under vacuum and therefore has a pressure inside that is lower than atmospheric pressure.

As illustrated in Figure 2, the container 25 comprises a plurality of inlets 28 (more generally at least one inlet 28) and a plurality of outlets 29 (more generally at least one outlet 29). A delivery of the compressor 20 is (indirectly) connected to the inlets 28 of the container 25 (i.e. between the delivery of the compressor 20 and the inlets 28 of the container 25 there are interposed the condenser 21 and expansion valve 22) and a suction of the compressor 20 is (directly) connected to the outlets 29 of the container 25.

Preferably, a plurality of inlets 28 and a plurality of outlets 29 are provided to allow the refrigerant gas from the refrigerant circuit 19 to diffuse evenly throughout the interior volume of the container 25.

In particular, the evaporation of the refrigerant gas of the refrigerant circuit 19 takes place inside the container 25, which is made watertight and performs the functions of an evaporator (i.e. inside the container 25 the refrigerant gas that has been cooled by the lamination valve 22 absorbs heat from the electrochemical pouch cells 15); in other words, the container 25 receives the refrigerant gas from the expansion valve 22 and sends the refrigerant gas to the compressor 20 allowing the refrigerant gas to evaporate inside, directly subtracting heat from the electrochemical pouch cells 15. That is, the internal volume of the container 25 of the storage system 14 is an integral part of the refrigerant circuit 19 since the refrigerant gas present in the refrigerant circuit 19 must necessarily pass through the internal volume of the container 25 in order to circulate.

The refrigerant gas of the refrigeration circuit 19 is in almost direct contact (due to the interposition of the casings 27) with the electrochemical pouch cells 15 and thus cools (or heats) the electrochemical pouch cells 15 by almost direct contact (as mentioned above, the refrigerant gas is preferably electrically insulating). This cooling mode is more efficient and effective because the refrigerant gas in the refrigeration circuit 19 is in almost direct contact with the electrochemical pouch cells 15.

The compressor 20 is configured to maintain a pressure inside the container 25 that is greater than atmospheric pressure. In particular, the compressor 20 is configured to maintain a pressure inside the container 25 that is greater than atmospheric pressure by at least 10 bar and preferably by at least 20 bar. In this way, the container 25 is filled with a pressurized gas that is conditioned (cooled or heated) by the air conditioning system 18 (which uses a reversible compression refrigeration cycle in a heat pump); that is, the air conditioning system 18 uses the gas inside the container 25 as a refrigerant gas.

In this way, the container 25 of the storage system 14 constitutes the evaporator member of the refrigeration circuit 19, i.e. inside the container 25 the refrigerant gas that has been cooled by the lamination valve 22 absorbs heat from the electrochemical pouch cells 15.

Preferably, a pressure sensor is arranged inside the container 25 which measures the internal pressure of the container 25 and is used to feedback control the compressor 20 so as to maintain the desired overpressure inside the container 25.

In use, a control unit 30 determines the temperature of electrochemical pouch cells 15 by indirect estimations (e.g. based on electrical resistance measurements) or by respective temperature sensors. Depending on the temperatures of the electrochemical pouch cells 15, the control unit 30 controls the refrigeration circuit 19 to cool or heat the electrochemical pouch cells 15.

The overpressure inside the casing 25 applies compression to the groups 26 of electrochemical pouch cells 15 due to the pressure difference between the outside of the casings 27 and the inside of the casings 27 (which are vacuum-sealed). This pneumatically generated compression is necessary for the proper functioning of the electrochemical pouch cells 15; i.e. in use, the electrochemical pouch cells 15 (which are flexible and have a soft casing) must be subjected to compression in order to maintain their shape (i.e. to avoid swelling or deforming during charge and discharge cycles) and prevent deformations that could damage the electrochemical pouch cells 15 or impair their performance (e.g. by degrading the contact between the electrodes and the separator).

It is important to note that it is only necessary to maintain a high overpressure inside the container 25 of the storage system 14 when the storage system 14 is actually being used, i.e. when the electrochemical pouch cells 15 are absorbing or releasing electrical energy; when the vehicle 1 is parked and switched off, it is not necessary to keep the electrochemical pouch cells 15 particularly compressed as they are not operational and therefore the residual pressure remaining from the last switch-off of the compressor 20 is more than sufficient. That is, the electrochemical pouch cells 15 only need to be compressed when they are operational, and therefore the compressor 20 is only operated when the electrochemical pouch cells 15 are operational.

By way of example, the compressor 20 could compress the refrigerant gas contained in the cooling circuit 19 to bring it to a pressure of 120-130 bar and a temperature above 100°C; in the lamination valve 22 the refrigerant gas is made to expand to reach a pressure of 20-40 bar and a temperature between 0°C and 20°C, and under these pressure and temperature conditions the refrigerant gas enters the container 25 of the storage system 14.

According to a preferred embodiment, the refrigerant gas contained in the cooling circuit 19 always remains in a gaseous state, i.e. it is never liquefied.

According to a possible embodiment, the air conditioning system 18 could be used to cool not only the storage system 14, but also to cool the electric machine 8 and/or the electronic power converter 13; i.e., the refrigeration circuit 19 has one or two branches that tap some of the refrigerant gas to cool the electric machine 8 and/or the electronic power converter 13 (as for example described in patent application EP2270918A1).

According to the embodiment shown in the accompanying figures, the compressor 20 pressurizing the container 25 of the storage system 14 is an integral part of the air conditioning system 18; according to a different embodiment not shown, the compressor 20 pressurizing the container 25 of the storage system 14 is completely independent of the air conditioning system 18 (which may also not be present or may be made in a completely different manner).

From the foregoing, it is clear that in the storage system 14, there is no type of mechanical system that compresses the electrochemical cells 15 forming the group 26, and the electrochemical cells 15 forming the group 26 are only subjected to the pressure originating from the pressure difference between the outside of the casing 27 and the inside of the casing 27 which is under vacuum.

The embodiments described here can be combined.

The storage system 14 described above has several advantages.

Firstly, in the storage system 14 described above, the compression of the electrochemical pouch cells 15 occurs only by pneumatic effect and therefore no (heavy and bulky) rigid structures are required to provide physical support to the groups 26 of electrochemical pouch cells 15 and maintain the necessary compression.

The compression of the electrochemical pouch cells 15 always remains constant over time as it depends solely on the pressure differential between the inside of the container 25 and the inside of the casings 27; that is to say, even if the electrochemical pouch cells 15 swell as they age, this change in their size does not lead to a (negative) increase in the compression to which they are subjected as is the case when compression is applied by means of traditional mechanical devices.

In addition, the compressor 20 required to maintain the overpressure inside the container 25 is also used as part of the air conditioning system 18 thus performing a dual function to the benefit of weight and space reduction.

The air conditioning system 18 of the storage system 14 described above is able to provide efficient and effective cooling and heating in all possible operating situations without having any negative effect on the air conditioning of the passenger compartment of the vehicle 1.

It is important to note that the air conditioning system 18 is dedicated to the storage system 14 only and can therefore be placed in close proximity to the storage system 14 limiting the length of the pneumatic ducts to a minimum. Furthermore, as the air conditioning system 18 is dedicated to the storage system 14 only, the effective temperature and pressure of the refrigerant gas can be chosen only according to the air conditioning needs of the storage system 14.

The container 25 that houses the groups 26 of electrochemical pouch cells 15 has a controlled atmosphere internally as it consists solely of the refrigerant gas used by the air conditioning system 18; thus, any trace of water (moisture and therefore possible condensation) is completely absent inside the container 25, to the benefit of increasing the service life of the storage system 14.

The storage system 14 described above is particularly light, as the total weight of the refrigerant gas used by the air conditioning system 18 is only a fraction of the total weight of the liquid that would be needed to perform liquid cooling.

### LIST OF REFERENCE NUMBERS OF THE FIGURES

- 1: vehicle
- 2: front wheels
- 3: rear wheels
- 4: powertrain system
- 5: internal combustion engine
- 6: drive shaft
- 7: transmission
- 8: electric machine
- 9: transmission shaft
- 10: mechanical gearbox
- 11: axle shafts
- 12: differential
- 13: electronic power converter
- 14: storage system
- 15: electrochemical cells (15)
- 16: air conditioning system
- 17: compressor
- 18: air conditioning system
- 19: refrigeration circuit
- 20: compressor
- 21: condenser
- 22: expansion valve
- 23: electric motor
- 24: radiator
- 25: container
- 26: group
- 27: casing
- 28: inlet
- 29: outlet
- 30: control unit

## Claims

1. A storage system (14) for an electric vehicle (1); the storage system (14) is designed to store electrical energy and comprises:
at least one group (26) of electrochemical pouch cells (15), each of which has a parallelepiped shape and a soft shell that makes it flexible; and
a watertight container (25) under pressure, which houses, on the inside, the group (26) of electrochemical pouch cells (15);
wherein all the electrochemical cells (15) of the group (26) are arranged in a row with their major side walls in mutual contact so that the group (26) as a whole has a parallelepiped shape;
the storage system (14) is **characterized in that:**
the group (26) of electrochemical pouch cells (15) is arranged inside a flexible, watertight casing (27), inside which vacuum was created; and
a compressor (20) is provided, which is configured to maintain a pressure inside the container (25) that is greater than atmospheric pressure so that the overpressure inside the container (25) applies compression to the group (26) of electrochemical pouch cells (15) because of the pressure difference between the outside of the casing (27) and the inside of the casing (27) which is under vacuum.

2. The storage system (14) according to claim 1, wherein the compressor (20) is configured to maintain a pressure inside the container (25) that is greater than atmospheric pressure by at least 10 bar and preferably by at least 20 bar.

3. The storage system (14) according to claim 1 or 2, wherein the container (25) is filled with a gas under pressure.

4. The storage system (14) according to claim 1, 2 or 3, wherein the container (25) is filled with carbon dioxide under pressure.

5. The storage system (14) according to one of claims 1 to 4, wherein:
the container (25) comprises at least one inlet (28) and at least one outlet (29);
a delivery of the compressor (20) is connected to the inlet (28) of the container (25); and
a suction of the compressor (20) is connected to the outlet (29) of the container (25).

6. The storage system (14) according to one of claims 1 to 5 and comprising an air conditioning system (18), which uses a compression refrigeration cycle to air-condition a gas located inside the container (25).

7. The storage system (14) according to claim 6, wherein the compressor (20) is an integral part of the air conditioning system (18).

8. The storage system (14) according to claim 7, wherein the air conditioning system (18) uses the gas located inside the container (25) as refrigerant gas.

9. The storage system (14) according to claim 8, wherein the air conditioning system (18) comprises a refrigeration circuit (19), which comprises, in turn, the compressor (20), a condenser (21), an expansion valve (22) and the container (25), which constitutes the evaporator member.

10. The storage system (14) according to claim 9, wherein the refrigeration circuit (19) comprises an air radiator (24), which is thermally coupled to the condenser (21).

11. The storage system (14) according to one of claims 1 to 10, wherein the air conditioning system (18) can be operated as a heat pump to produce heat that is used to heat the storage system (14).

12. The storage system (14) according to one of claims 1 to 11, wherein:
the electrochemical pouch cells (15) have a flexible, rectangular shape with a flat, rectangular structure; and
in the group (26), each electrochemical cell (15) is positioned next to the subsequent electrochemical cell (15) with no gaps between the major side surfaces.

13. The storage system (14) according to one of claims 1 to 12, wherein each electrochemical cell (15) is enclosed in its own flexible casing made from a laminated film.

14. The storage system (14) according to any one of claims 1 to 13, wherein no type of mechanical system is provided which compresses the electrochemical cells (15) forming the group (26) and the electrochemical cells (15) forming the group (26) are subjected only to the pressure originating from the pressure difference between the outside of the casing (27) and the inside of the casing (27) which is under vacuum.

15. An electric vehicle (1) comprising:
at least one electric machine (8);
an electronic power converter (13), which controls the electric machine (8); and
a storage system (14) according to one of claims 1 to 14 and connected to the electronic power converter (13).
